# EUROPEAN PATENT APPLICATION

(11) **EP 1 139 612 A2**
(43) Date of publication of application: **04.10.2001**
(21) Application number: 01103600.1
(22) Date of filing: 21.02.2001
(51) Int. Cl.: H04L 12/46, H04L 12/42, H04L 12/26

(54) **Inter-LAN communication device and inter-LAN communication network employing the same**

(30) Priority: 28.03.2000 JP 2000089328
(71) Applicant: FUJITSU LIMITED, Kawasaki-shi, Kanagawa 211-8588 (JP)
(72) Inventor: Motoyama, Hideyuki, c/o Fujitsu Limited, Kawasaki-shi, Kanagawa 211-8588 (JP)
(74) Representative: HOFFMANN - EITLE

(57) **Abstract**

The present invention provides an inter-LAN communication method and communication device to implement a LAN interface to accommodate the traffic of LAN data which constantly changes and to support an increase of traffic in the future. The present invention is an inter-LAN communication device which performs inter-communication connecting the segments of LANs, comprising LAN interface accommodation means for accommodating the communication interface of the LAN, traffic monitoring means for monitoring the traffic of the LAN data, communication control means for controlling communication so as to inter-connect the LAN segment of the local station (local node) and the LAN segment of a station other than the local station (another node), path control means for switching a communication path according to the instruction from the traffic monitoring means, and packet switch control means for switching a packeted LAN data.

## Description

### BACKGROUND OF THE INVENTION

### 1. Field of the Invention

The present invention relates to an inter-LAN communication device which accommodates a LAN interface for inter-communication among LAN segments in a SONET (Synchronous Optical Network)/SDH (Synchronous Digital Hierarchy) system for providing conventional communication services (e.g. leased lines, ISDN, voice), and an inter-LAN communication network where the inter-LAN communication device is employed.

### 2. Description of the Related Art

So far networks which are distant are connected via a LAN (Local Area Network) - WAN (Wide Area Network) - LAN format. To connect communication in this format, such interface equipment as routers must be provided, and switching to a conventional communication service, such as ISDN and leased lines, is necessary for inter-communication.

This interface equipment is used in a fixed band depending on the communication speed of the respective interface equipment to be connected in a SONET/SDH system, which began to spread widely as a backbone network to provide conventional communication services (e.g. leased lines, ISDN, voice).

Also this communication is only Point-to-Point (hereafter called PP), so in order to construct a private network, connecting a plurality of bases, a 1:N star connection in a radial format, or an N:N mesh connection in a spider web format, is necessary.

Today LAN is used primarily with the Internet, where data is generated in bursts. Therefore if LANs are interconnected using a fixed band for the above mentioned conventional communication services, an open band is generated when the data flow rate in a PP connection is low, which wastes bands.

If the data flow rate increases and exceeds the communication band of a conventional communication service, considerable data loss occurs. In order to guarantee data when traffic in a LAN is at the maximum, a conventional communication network with a wide band is required. Band is wasted when the data flow rate is low, and communication cost becomes a problem.

A means of solving such problems is a method of using ATM (Asynchronous Transfer Mode) which implements a plurality of PP connections sharing a communication band. With this method, however, cells used for an ATM have high overhead which is not information, and still another overhead must be added if a LAN interface is accommodated.

In other words, the use of ATM makes the processing of burst data possible, but bands in the SONET/SDH system are wasted by overhead which is not information.

Also when a private network is constructed as one LAN group connecting a plurality of bases, creating a plurality of PP connections in a star format by a 1:N connection positioning a LAN switch at one base, or creating a mesh connection in a spider web format among the bases, is necessary. In this case, communication cost becomes too high since a plurality of conventional communication networks are connected.

Also many interfaces for data communication provided in a conventional communication service require complicated protocols and settings, and the user must not only manage their own LAN but must also manage and operate interfaces at the WAN side, where the operation cost becomes too high.

### SUMMARY OF THE INVENTION

With the foregoing in view, it is an object of the present invention to provide an inter-LAN communication device, where the traffic of constantly changing LAN data can be accommodated and a LAN interface which can support an increase in traffic in the future can be implemented, and an inter-LAN communication network using the inter-LAN communication device.

It is another object of the present invention to provide an inter-LAN communication method and a communication device which satisfies the following requirements.
(1) Implements a band sharing type PP connection aiming at the effective use of bands, decreasing physical connection lines and decreasing communication cost
(2) Configures LANs at a plurality of distant bases into one segment by implementing band-sharing type LAN switching functions
(3) Implements construction of a private network of a plurality of LANs into one ring
(4) Provides a fixed band which the user actually uses or requires without depending on the speed of the LAN interface, aiming at data communication where minimum access bands are guaranteed and data loss at burst data generation is minimized, and implements communication established along with a common data communication band where burst data exceeding the fixed band can be used, and
(5) Provides an interface common to the LAN managed by the user, so as to decrease cost from a management aspect.

To achieve the above objects, an inter-LAN communication device and an inter-LAN communication network according to the present invention are characterized in that a plurality of inter-LAN devices are connected in a ring configuration, inter-communication between LAN segments is controlled, and each one of the plurality of inter-LAN communication devices comprises LAN interface accommodation means for accommodating a communication interface of a LAN segment, traffic monitoring means for monitoring the traffic of LAN data, communication control means for controlling the communication for inter-connecting a LAN segment of a local node and a LAN segment of another node, path selection means for switching a communication path according to the instruction from the traffic monitoring means, and packet switch control means for switching the packeted LAN data.

A preferable mode is that the above mentioned communication control means further comprises a buffer which stores data transmitted from the LAN segment, and the above mentioned traffic monitoring means monitors traffic by monitoring the capacity of the buffer which stores data transmitted from the LAN segment.

Another mode is that the above mentioned traffic monitoring means monitors traffic by monitoring the transmission intervals of data which are transmitted from the LAN segment.

Another mode is that the above mentioned communication control means packets the LAN data by adding overhead which indicates the node numbers of a transmission source and a transmission destination.

Another preferable mode is that the above mentioned communication control means adds a sequence number for each packet at the transmission side so as to prevent a mismatch of the arrival sequence when the communication path is different for each packet due to path switching.

Still another preferable mode is that the above mentioned path control means adds a sequence number for each packet after the added node number at the transmission side so as to prevent a mismatch of the arrival sequence when the communication path is different for each packet due to path switching.

Still another preferable mode is that the above mentioned path control means matches the phases of the packets by referring to the above mentioned sequence numbers and deleting the sequence numbers of the added information at the receiving side.

Another preferable mode is an inter-LAN communication device, wherein the above mentioned packet switch control means further comprises an address learning part, which learns the information where the transmission source and transmission destination node number information, which is added to a packet sent from another LAN segment, the transmission source and transmission destination address information, which the LAN data has, and the communication port information, which the packet switch control means has, are associated and stores this association information.

Still another preferable mode is an inter-LAN communication device, wherein for the node numbers of the overhead to indicate the transmission source and the transmission destination in the above mentioned communication control means, a local node address, which is preset, is added as the transmission source node number, and a node number which is derived by searching and referring to the above mentioned learned and stored association information on the node numbers, communication ports and addresses based on the transmission destination addresses which the LAN data has, is added as the transmission destination node number.

Another preferred mode is that the above mentioned packet switch control means compares the local node number, which is preset, and the transmission destination node number of a packet sent from another node, which is another LAN segment, based on the above mentioned learned and stored association information of the node numbers, ports and addresses, and the packet is received by the local node if the transmission destination node number is the same as the local node number, and a communication port is selected and the packet is transferred if the transmission destination node number is another node number.

More features of the present invention will be clarified through the embodiments which will be described below with reference to the accompanying drawings.

### BRIEF DESCRIPTION OF THE DRAWINGS

Fig. 1 is a network block diagram depicting the concept of the present embodiment;
Fig. 2 is a diagram depicting a configuration of a band sharing type or minimum band guarantee type pseudo-LAN switch 300 based on a SONET/SDH system network;
Fig. 3 is a diagram depicting a SONET/SDH system with a ring configuration to implement LAN accommodation based on band sharing according to the first embodiment where the present invention is applied;
Fig. 4 is a diagram depicting path setting and data routing during normal times when a conventional interface 14 between the node 01 and the node 04 is accommodated in a conventional SONET/SDH system with a ring configuration;
Fig. 5 is a diagram depicting data routing when a failure occurs at the ring side in the configuration shown in Fig. 4;
Fig. 6 is a diagram depicting path setting between the LAN interfaces of each node and data routing during normal times to implement a band sharing system (mode) according to the present embodiment;
Fig. 7 is a diagram depicting data routing between the node 01 and the node 04 when a failure X occurs at the ring side in the configuration shown in Fig. 6;
Fig. 8 is a diagram depicting data routing in a minimum band guarantee system (mode) where both a conventional PP connection path setting and a band sharing type path setting are used;
Fig. 9 is a diagram depicting the configuration of the LAN interface 15 in Fig. 3, Fig. 6, Fig. 7 and Fig. 8;
Fig. 10 is a diagram depicting the detailed configuration of the LAN data frame conversion part 22;
Fig. 11 is a diagram depicting the frame configuration of a packet at the SONET/SDH system side converted from LAN data by the frame conversion part 220;
Fig. 12 is a diagram depicting the general configuration of the path selection part 23 in Fig. 9;
Fig. 13 is a diagram depicting the detailed configuration of the transmission part 230 in Fig. 12;
Fig. 14 is a diagram depicting the detailed configuration of the receiving part 231 in Fig. 12;
Fig. 15 is a diagram depicting the transmission control of the path selection switch 230-4;
Fig. 16 is a diagram depicting the frame configuration where the sequence number of the packet is added;
Fig. 17 is a diagram depicting the configuration inside the packet combining part 231-2;
Fig. 18 is a diagram depicting a configuration example of the packet switch part 24;
Fig. 19 is a diagram depicting a configuration example of the address learning part 28 in Fig. 9; and
Fig. 20 is a table indicating an example of the learning table values in the node 02 in Fig. 6.

### DESCRIPTION OF THE PREFERRED EMBODIMENTS

Embodiments of the present invention will now be described with reference to the drawings. For description, the same reference symbols are used for identical or similar parts in the drawings.

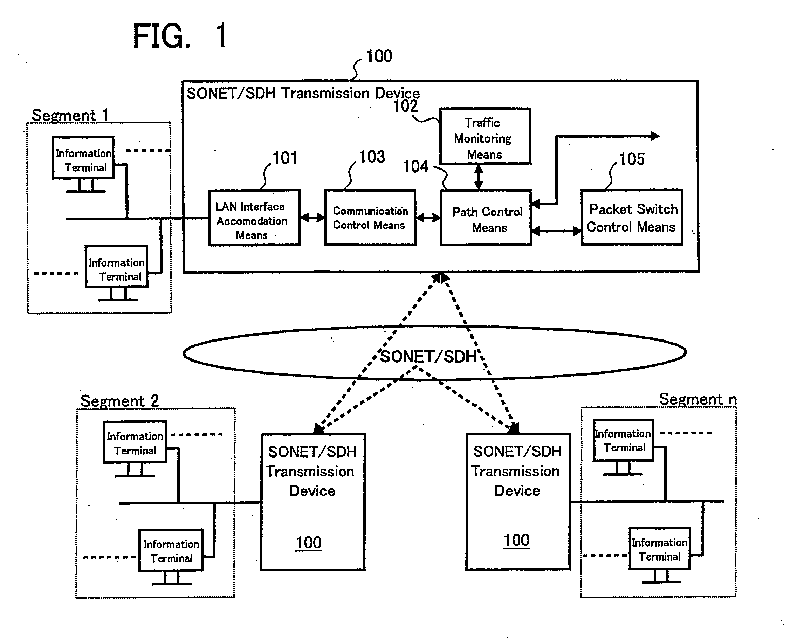

Fig. 1 is a network block diagram depicting the concept of the present invention. This network is characterized in the configuration of the SONET/SDH transmission device 100 which inter-communicates by an inter-LAN connection.

A plurality of LAN segments 1-N are connected to the SONET/SDH system using the SONET/SDH transmission device 100 as an interface.

In Fig. 1, the configuration of one SONET/SDH transmission device 100 is used as an example. Such a SONET/SDH transmission device 100 has a LAN interface accommodation means 101 for accommodating a communication interface of the corresponding LAN 1-N.

The traffic monitoring means 102 has a function to monitor the traffic of the LAN data which the local station (local node) transmits to another station (another node). The communication control means 103 matches the communication systems and controls communication for inter-connection between the LAN segment of the local station (local node) and the LAN segment of a station (another node) other than the local station.

The path control means 104 controls the switching of the communication paths of the LAN data, which is transmitted by instructions from the traffic monitoring means 102, according to the traffic and communication path setting status.

The packet switch control means 105 selects whether the received packet data is the packet data of the LAN to the local station (local node) or not, and if the packet data is the packet data for another station, the packet switch control means 105 transfers the packet data to this other station.

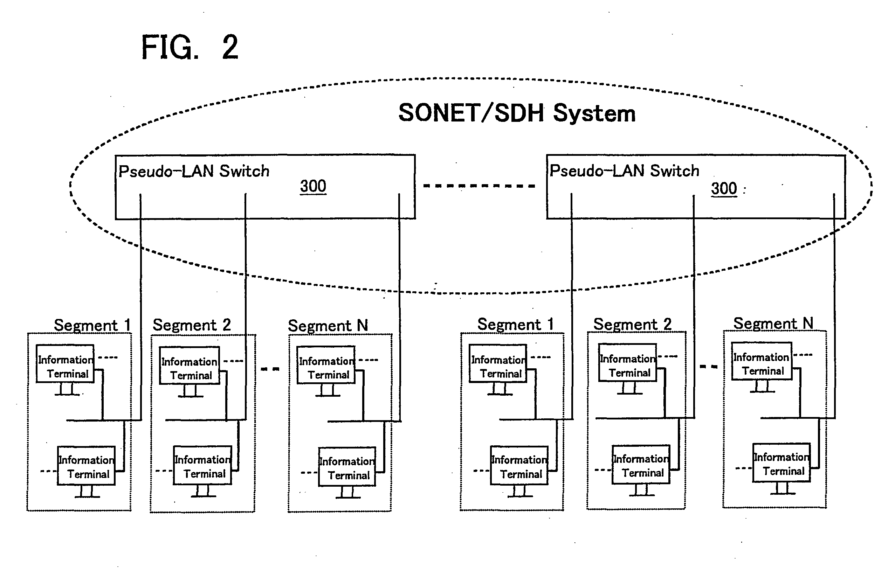

By setting paths in the later mentioned SONET/SDH system with a ring configuration for the SONET/SDH transmission device 100 according to the present invention which has the configuration described above, a band sharing type or a minimum band guarantee type pseudo-LAN switch 300 of the SONET/SDH system network shown in Fig. 2 is implemented. Details on the implementation of such a configuration will be described again later.

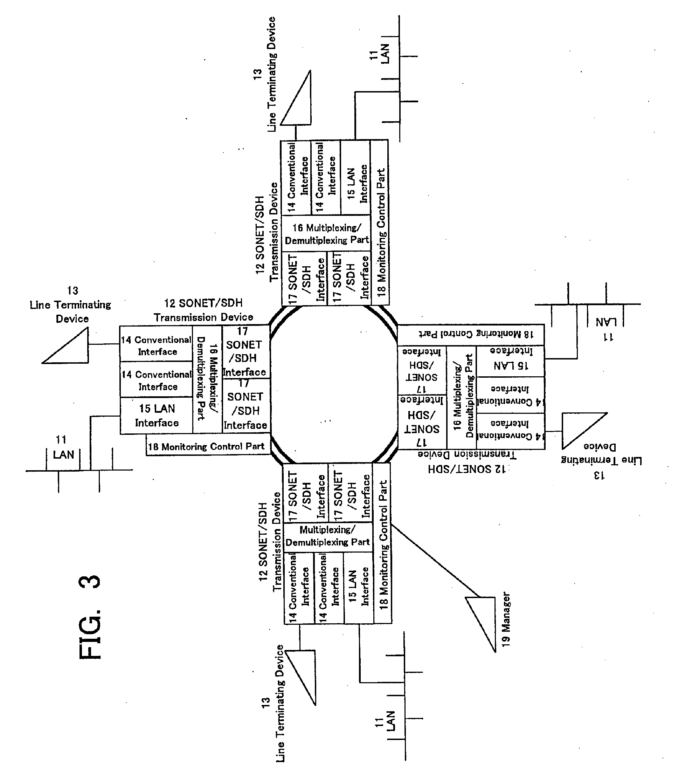

Fig. 3 shows a first embodiment to apply the present invention, indicating a SONET/SDH system with a ring configuration implementing a LAN accommodation by sharing bands.

The SONET/SDH transmission device 12, which is respective node equipment constituting the SONET/SDH system, comprises a LAN interface 15 for accommodating a LAN segment 11 of the user, in addition to a conventional interface 14 for accommodating a line terminating device 13, which has a conventional communication interface.

The conceptual configuration of such a LAN interface 15 is as described in Fig. 1.

The multiplexing/demultiplexing part 16 has a multiplexing/demultiplexing (ADD/DROP) function of the logical path base (STS-1/STM-1: SONET/SDH interface name, etc.) of data which is transmitted between a high-speed SONET/SDH interface and a low-speed SONET/SDH interface. The multiplexing/demultiplexing part 16 also has a function to multiplex/demultiplex a packet of the LAN data from the LAN interface 15 to the payload in the data frame in the above mentioned path.

The SONET/SDH interface part 17 has a high-speed SONET/SDH interface function which connects between node equipment (SONET/SDH transmission devices 12).

The SONET/SDH interface part 17 also has a monitoring control function part 18 having a function to monitor each node equipment, and a manager 19 which monitors and controls the SONET/SDH system by the DCC (Data Continuous Channel) information in the overhead of the data.

There are two types of SONET/SDH systems, UPSR (Unidirectional Path Switched Ring) and BLSR (Bi-directional Line Switched Ring), depending on the switching method of the redundant system.

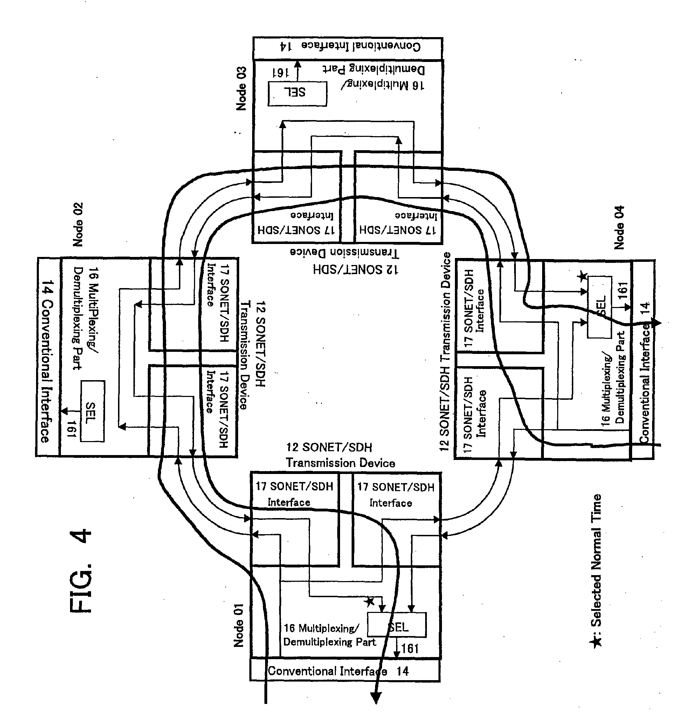

Fig. 4 is a diagram depicting path setting and data routing during normal times in the SONET/SDH system with a ring configuration (UPSR system) in Fig. 3, where a conventional interface 14 between the node 01 (identification number of the SONET/SDH transmission device 12) and the node 04 is accommodated.

To connect the node 01 and the node 04, a through path is set for the node 02 and the node 03, which are not connected, by the multiplexing/demultiplexing part 16. In the node 01 and the node 04, multiplexing/demultiplexing (ADD/DROP) is set and receive data is selected so as to implement PP connection communication.

Therefore in order to accommodate a PP connection by a plurality of conventional interfaces 14, a plurality of paths are set and bands in a ring configuration are used for these settings. In Fig. 4, the selector 161 in the multiplexing/demultiplexing part 16 is set so as to select a line at the side with a " 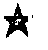 ".

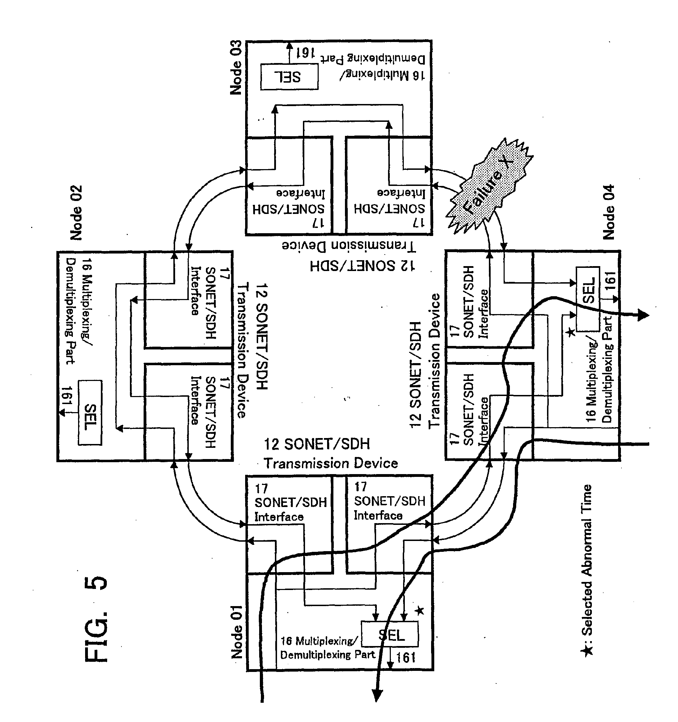

Fig. 5 shows data routing when a failure occurs at the ring side in the configuration shown in Fig. 4. In this case, if a failure X occurs between the node 03 and 04 in Fig. 5, the selector 161 of the nodes 01 and 04 selects a line at the side with a " 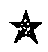 ", which is at the opposite side from the case in Fig. 4.

By this, data can be transferred between the nodes 03 and 04, avoiding the route where a failure X occurred. In this way, the LAN interface 17 is unnecessary when the conventional interface 14 is accommodated, in other words, when only the interface 14 is used.

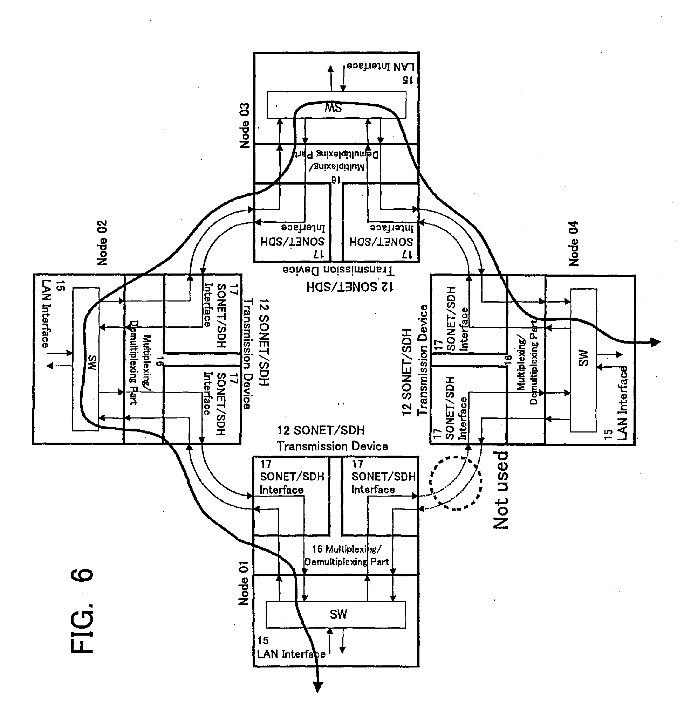

Fig. 6 shows path setting between the LAN interface of each node to implement the band sharing system (mode) according to the present embodiment, and shows data routing between the node 01 and the node 04 during normal times as an example.

In this configuration, not only traffic between the node 01 and the node 04 but also traffic between other nodes pass through the same path. This path setting can be applied to the UPSR/BLSR methods of the SONET/SDH system with a ring configuration.

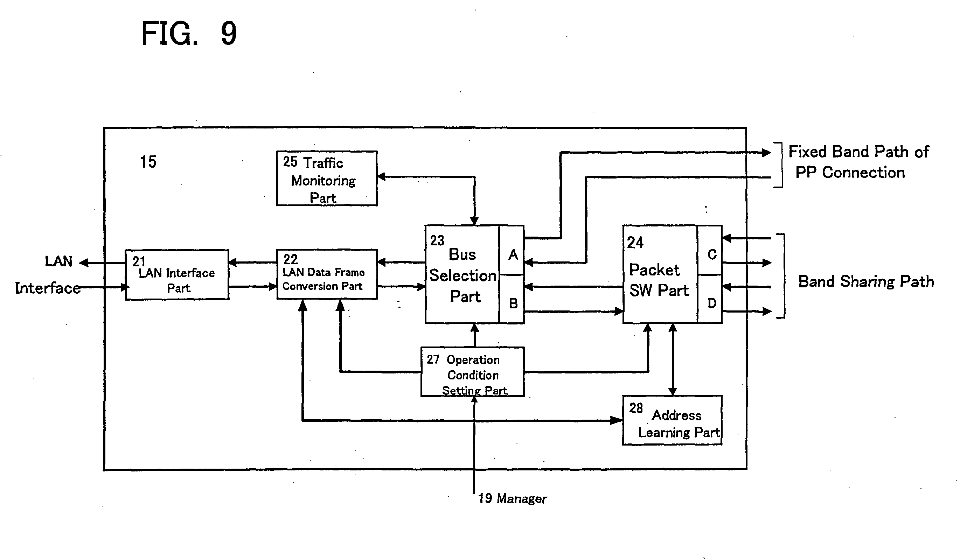

In the multiplexing/demultiplexing part 16, ADD/DROP is set for all the nodes, but receive data is not selected, and is directly connected to a packet switch part of the LAN interface 15, which will be described later (see Fig. 9, packet switch part 24).

The packet switch part identifies data to be received by the local node and transfers the data which should not be received by the local node to the next node (through path). This data identification and transfer method will be described later.

In order to prevent a back flow of data (return of data transmitted from the node 01 back to the node 01 again), the traffic between the first node 01 and the last node 04 of the node identification number in the ring configuration is cutoff. In other words, the path is set but data does not flow.

Such a setting and function implements the band sharing type LAN switch function in the SONET/SDH system with a ring configuration. In each node, a virtual network 300 of the plurality of LANs shown in Fig. 2 can be constructed within one ring by mounting a LAN interface and setting a path in each node.

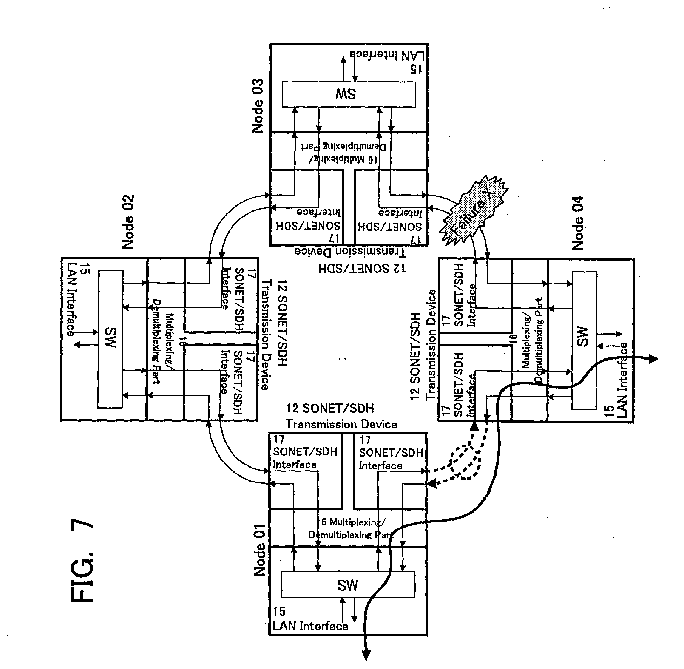

Fig. 7 shows data routing between the node 01 and the node 04 when a failure X occurs at the ring side in the configuration shown in Fig. 6. If a failure X occurs at the ring part between the node 03 and the node 04, the node 01 and the node 04 immediately recognizes this status.

The traffic of the path between the node 01 and the node 04 which are preset to recognize a failure X is now opened.

The node 04 and the node 03 can immediately recognize the failure X since it is a failure in the local node. The node 01 recognizes the occurrence of the failure and the location of the failure by receiving a failure notice in the monitoring control data flowing in the DCC (Data Continuous Channel) of the overhead (T0H) in the SONET/SDH frame at the ring side. Or manual operation control based on an instruction from the manager 19 is also possible.

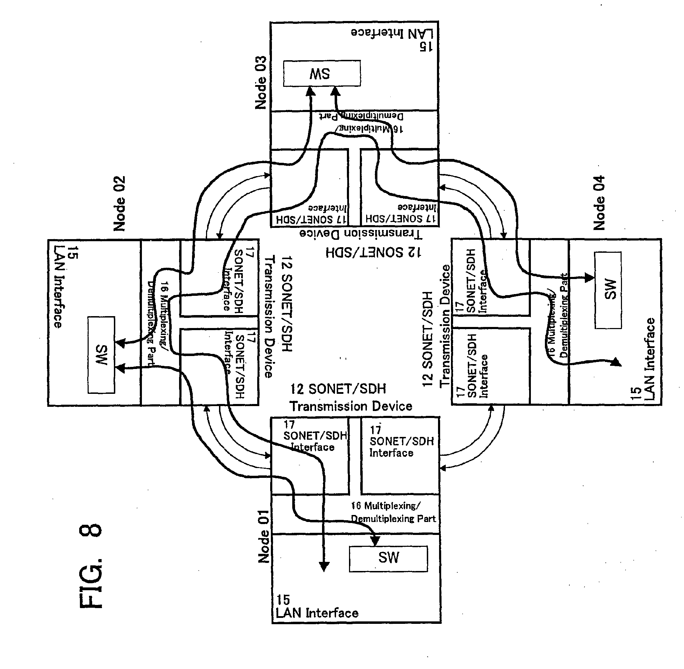

Fig. 8 shows the case of a minimum band guarantee system (mode) where both a conventional PP connection path setting and a band sharing type path setting are used, and shows data routing between the node 01 and the node 04 as an example.

In this configuration, a PP connection path is used for traffic in a fixed band between the node 01 and the node 04, and a band sharing path is used for overflow traffic, which is outside the fixed band in the PP connection when burst data is generated.

In this way, the minimum access band between the node 01 and the node 04 is guaranteed, and data communication, which minimizes the loss of data when burst data is generated, can be implemented. The allocation of traffic to the paths in this case will be described later.

Fig. 9 shows an example of the configuration of the LAN interface 15 to implement data transmission in the network configuration described as an embodiment in Fig. 3 and Fig. 6 to Fig. 8.

In Fig. 9, the LAN interface 15 is comprised of a LAN interface part 21, a LAN data frame conversion part 22, a path selection part 23, a packet switch part 24, a traffic monitoring part 25, a local node operation condition setting part 27 and an address learning part 28.

In the operation condition setting part 27, the operation mode (band sharing or minimum band guarantee), the local node number and the PP connection destination node number in the minimum band guarantee mode are notified and set by the manager 19.

Now the function of each component of the LAN interface 15 in Fig. 9 will be described in relation to the transmission function and the receiving function.

### [Transmission function]

LAN data sent from the LAN segment 1-N of the user is electrically terminated by the LAN interface part 21 and sent to the LAN data frame conversion part 22.

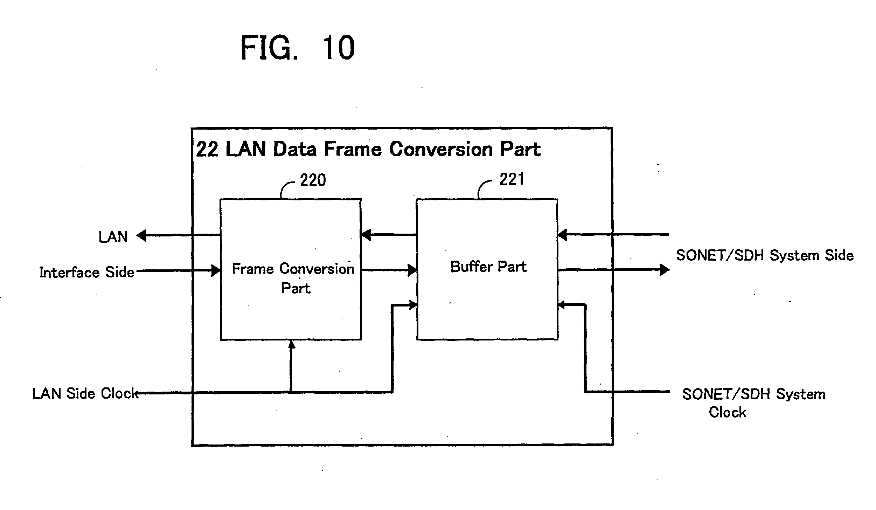

Fig. 10 shows the detailed configuration of the LAN data frame conversion part 22. In the LAN data frame conversion part 22, the overhead at the head of the LAN data and the check data at the end of the LAN data, which will be wasted in the bands of the SONET/SDH system, are deleted by the frame conversion part 220. The data where the overhead and the check data at the end are deleted is converted to the frame format to pass through the SONET/SDH system.

Then in the buffer part 221, the clock is switched from the LAN side clock to the clock in the SONET/SDH system and speed is converted, and when traffic is congested, packet buffering is performed so as to prevent the loss of packets.

Frame conversion of LAN data in the frame conversion part 220 is a function to add a transmission destination node number DN (Destination Number), a transmission source node number SN (Source Number), which are the overhead data which make it possible to distribute packets by the packet switch 24 for each LAN data of the packet, and flags, to indicate the beginning and the end of the packet respectively.

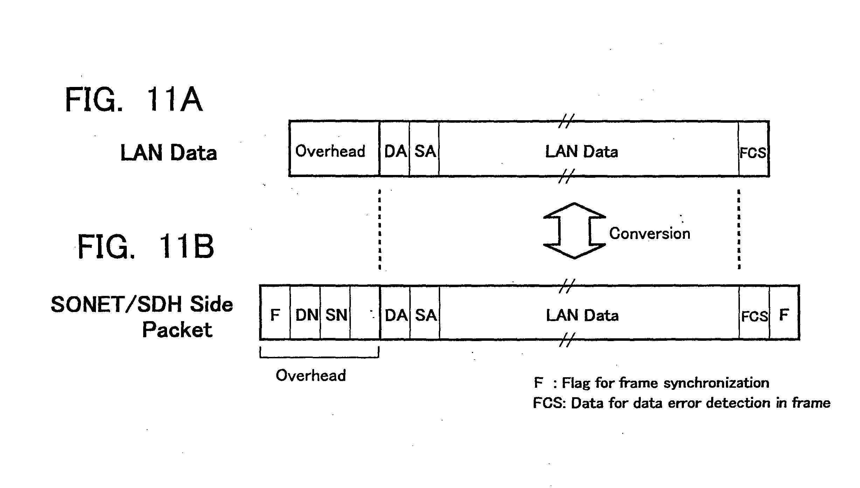

Fig. 11 is a diagram depicting the configuration of a frame of the SONET/SDH system side packet (Fig. 11 (B)), which is converted from the LAN data (Fig. 11 (A)) by the frame conversion part 220.

DN and SN at the overhead of the SONET/SDH system side packet are node addresses which indicate the transmission destination and the transmission source nodes respectively.

For the transmission destination node address DN, the learning table of the address learning part 28 (Fig. 9) stored by the packet data passing through the packet switch 24 is referred to based on the DA of the transmission destination terminal address DA (Destination Address) and the transmission source terminal address SA (Source Address) in the LAN data, and the DN corresponding to the DA from the local node is added to the overhead. The transmission source node SN is added by the operation condition setting part 29.

When the DN corresponding to the DA from the local node cannot be referred to by the learning table of the address learning part 28, or when the DA is a broadcast address, a DN value to indicate broadcast is added.

In the address learning part 28, not only the correlation data between the node numbers other than the local node and the LAN addresses, but also the association with the port (C or D) of the band sharing path is learned and stored. This function will be described later.

### [Receiving function]

The packet from the SONET/SDH system side sent from another node is stored once in the buffer part 221 of the LAN data frame conversion part 22 (Fig. 10) at the clock of the SONET/SDH system. Then the clock is switched in order to be read by the clock in the LAN interface, and speed is converted. When traffic is congested, a packet is buffered by the buffer.

Then in the frame conversion part 220, the flag and the DN/SN are simply deleted and the packet is converted to the frame format of the LAN interface, and sent to the LAN interface part 21.

In the LAN interface part 21, electrical matching is performed for the LAN segment and electric conversion is performed for transmission.

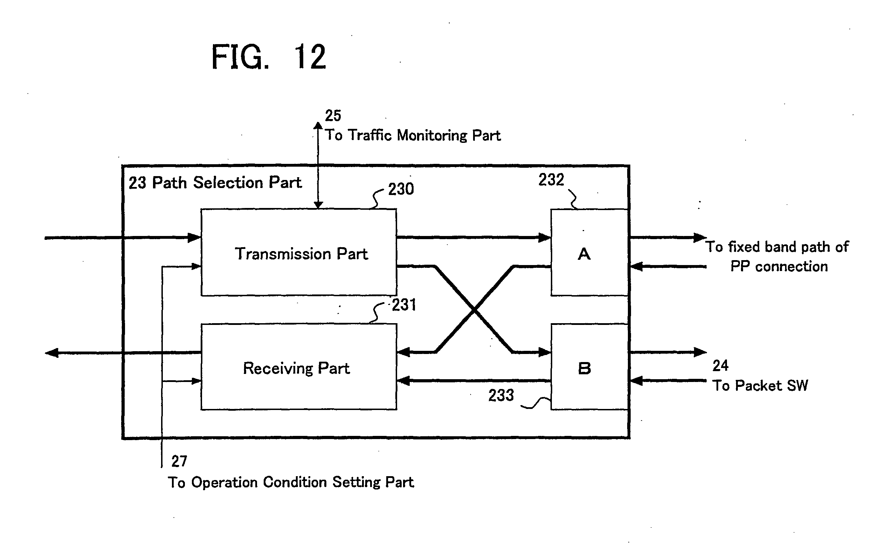

Fig. 12 shows the general configuration of the path selection part 23 in Fig. 9 according to the embodiment. Operation of each operation mode depending on the path access mode in the SONET/SDH system will now be described.

### When band sharing mode is set

### [Transmission function]

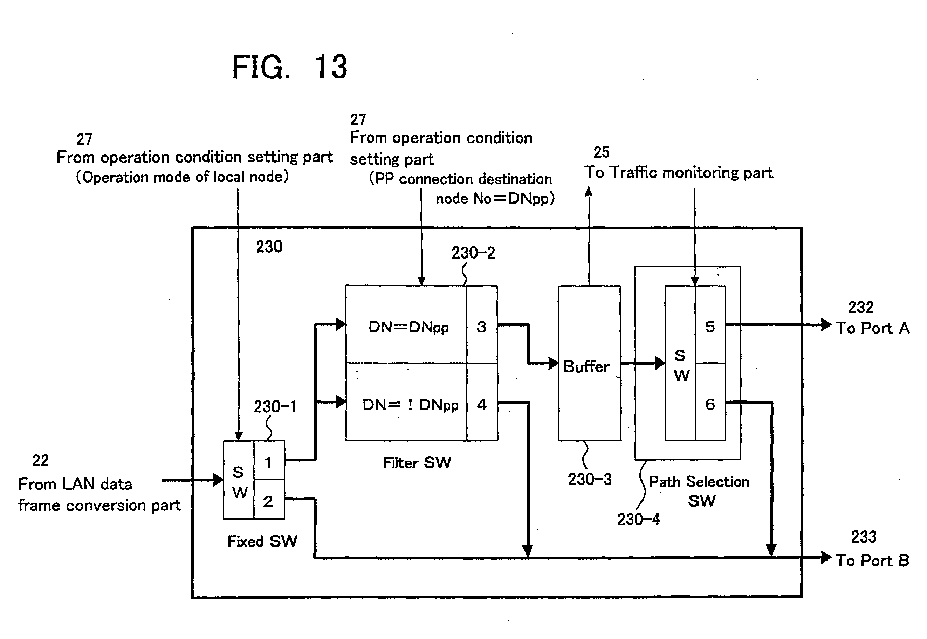

Fig. 13 is a diagram depicting the detailed configuration of the transmission part 230 in Fig. 12. In the band sharing mode, the fixed switch 230-1 is set and fixed to the port (2) side by the operation condition setting part 27. Therefore, the packets from the LAN data frame conversion part 22 always flow into the port (2) side and are output from the port (B) 233.

### [Receiving function]

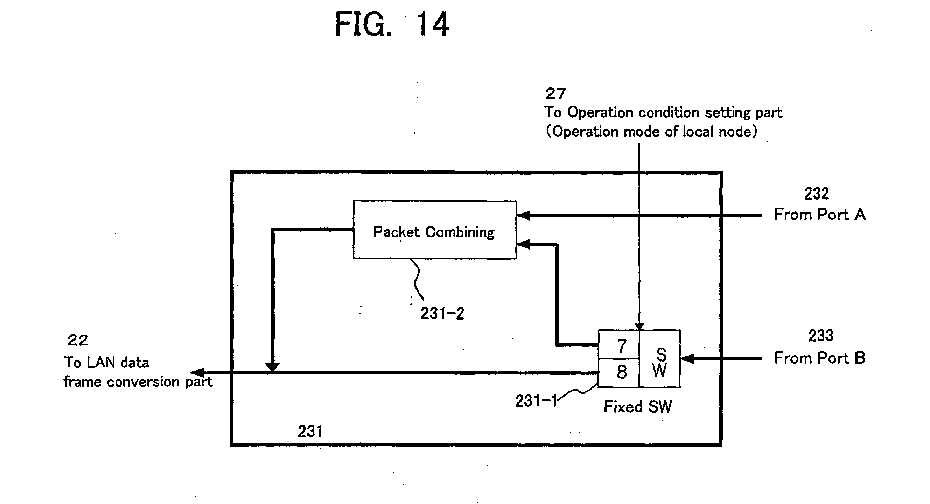

Fig. 14 is a diagram depicting the detailed configuration of the receiving part 231 in Fig. 12. In the band sharing mode, the fixed switch 231-1 is set and fixed to the port (8) side by the operation condition setting part 27. Therefore, the received packets which were input from the port (B) 233 always flow into the port (8) side, and are output to the LAN data frame conversion part 22.

Basically when the band sharing mode is set, packets are passed through the path selection part 23.

### Minimum access band guarantee mode accessing both fixed band by PP connection and shared band

When burst data is generated in communication between nodes where the fixed band path is set in the minimum access band guarantee mode, and communication between LANs is generated exceeding the transfer capacity in the fixed band path, processing is executed as follows.

If communication is for a short time, the data is smoothed by the buffer part 221 of the LAN data frame conversion part 22 or the buffer 230-3 of the path selection part 23, and the data can be transferred to the transmission destination without losing data. However, when a large volume file is transferred, for example, the buffer part 222 and the buffer 230-3 cannot absorb all the data and data is lost due to a buffer overflow.

Therefore, the path to be used for a packet data transfer of the LAN in the SONET/SDH system is instantaneously changed before entering this overflow status. In this way, traffic exceeding the fixed band is shifted to the shared band, and data errors due to a loss of data can be minimized.

### [Transmission function]

In the minimum access band guarantee mode, the fixed switch 230-1 of the transmission part 230 of the path selection part 23 is set and fixed to the port (1) side by the operation condition setting port 27. By this, packets from the LAN data frame conversion part 22 always flow into the port (1) side, and are output to the filter switch 230-2.

The filter switch 230-2 has been set such that the node number DN of the PP connection destination is "DNpp" by the operation condition setting part 27, and refers to the DN value of the SONET/SDH side packet in Fig. 11 and compares the DN value with the DNpp value. After this comparison, the packets are output to the port (3) side if the DN value is the same as "DNpp", or to the port (4) side if different.

When the packets are output to the port (4) side, the packets are output to the port (B) 233 as is. If the packets are output to the port (3) side, the packets are temporarily stored in the buffer 230-3 to monitor traffic or to relax an instantaneous congestion status, and then are output to the sequential path selection switch 230-4.

The path selection switch 230-4 outputs the packets to the port (5) side (port (A) 232 at the fixed band path side) as long as the traffic does not exceed the fixed band path. When the traffic monitoring part 25 recognizes a fixed band overflow, the traffic monitoring part 25 instructs switching so that the traffic which exceeded the fixed band is output to the port (6) side (port (B) 233 at the shared band path side).

If the packets are sent to the fixed band path of the PP connection and the band sharing path in this way, the route to pass through is different for each packet. This may reverse the sequence of packet transmission, which causes data errors.

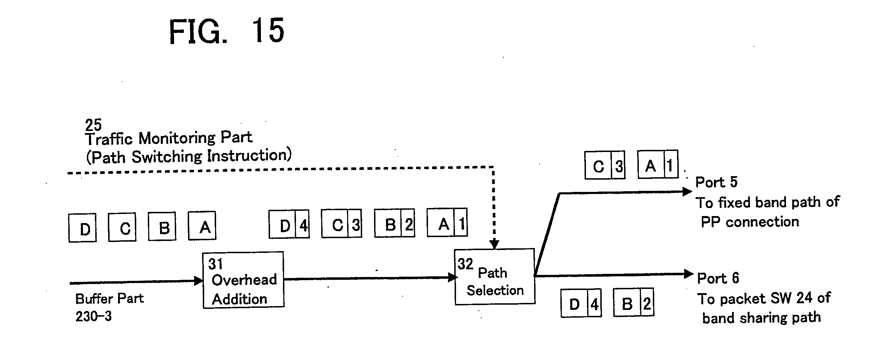

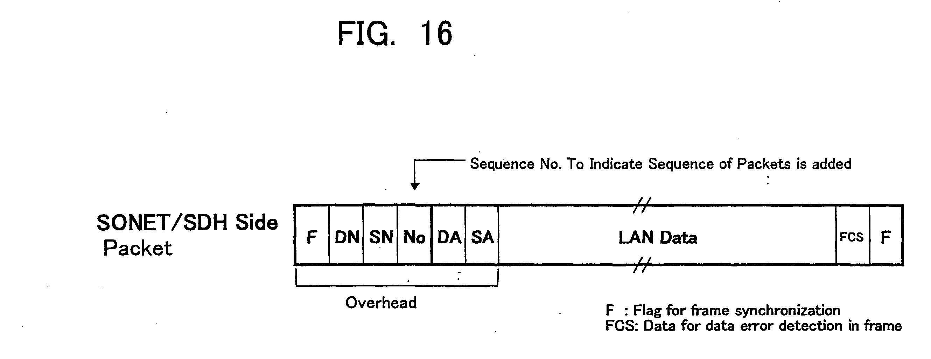

To prevent this, the path selection switch 230-4 adds a sequence number to indicate the sequence to the overhead of each packet before output. This processing will be described with reference to Fig. 15 and Fig. 16.

Fig. 15 is a diagram depicting the processing to add the sequence number of the packet by the path selection switch 230-4, and Fig. 16 shows the frame configuration when the sequence number of the packet is added. The detailed operation to add the sequence number will be described below.

The path selection switch 230-4 is comprised of an overhead addition function part 31 and a path selection function part 32. A sequence number, which is the sequence number of a packet, is added to a packet which is input from the buffer 230-3 by the path overhead addition function part 31. For example, the sequence numbers 1, 2, 3 and 4 are added sequentially to the packets A, B, C and D, as shown in Fig. 15.

Then the path selection function part 32 distributes the packet to either a fixed band path, which is set for inter-LAN connection, or a band sharing path. As conditions for distribution, traffic within the fixed band is sent to the fixed band path side (port terminal (5)), and when a band overflow occurs by the generation of burst data, the traffic monitoring part 25, which monitors the traffic status, notifies of a band overflow (instructs to switch the path) and the path selection function part 32 transmits the packet to the band sharing path side (port terminal (6)).

The distributed packet is sent to the packet switch part 24 which is connected to the port (A) 232 of the port terminal (5) side (fixed band path side) or to the port (B) 233 of the port terminal (6) side.

### [Receiving function]

In the minimum access band guarantee mode, a packet which is input from the fixed band path (port (A) 232) side is directly input to the packet combining port 231-2 of the receive part 231 of the path selection part 23 in Fig. 14.

A packet which is input from the shared band path (port (B) 233) side is also input to the packet combining part 231-2 in Fig. 14 since the fixed switch 231-1 is set and fixed to the port (7) side by the operation condition setting part 27.

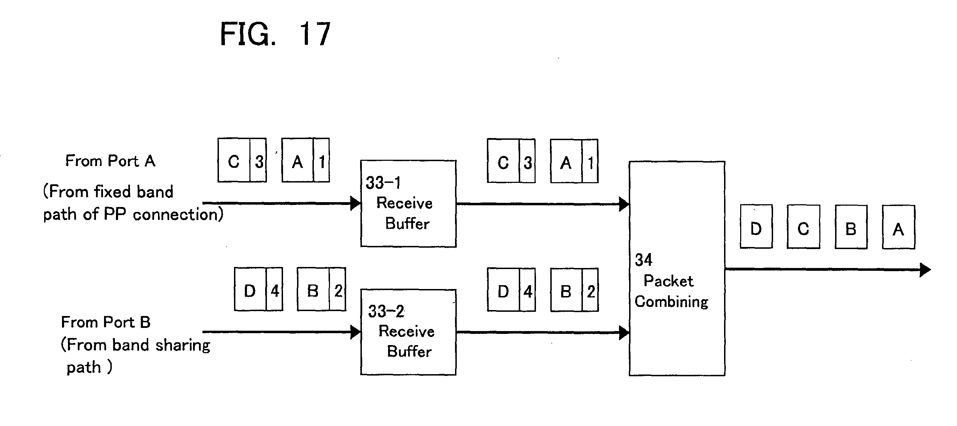

Fig. 17 shows a configuration example of the packet combining part 231-2. The detailed operation will now be described.

Since a delay in each path is applied to each packet in each path, the packet combining part 231-2 has receive buffers 33-1 and 33-2 corresponding to each path. A packet from the fixed band path of the PP connection is input from the port A to the receive buffer 33-1. And a packet from the band sharing path is input to the receive buffer 33-2.

The sequence number No attached to the header of the packet is referred to and the phase is matched in these receive buffers 33-1 and 33-2. After phase matching, the sequence number No added by the packet combining part 34 is removed from the packet, the packet sequence is corrected to normal, and the packets are sent to the LAN data frame conversion part 22.

### Traffic monitoring

The following two types of detection functions are available as a method for the traffic monitoring part 25 to detect a band overflow due to burst error generation.
(1) The buffer capacity of the buffer 230-3 in the transmission part 230 of the path selection part 23 is monitored, and the band capacity overflow of the fixed band path is judged by measuring the open capacity of the buffer and the decreasing ratio.
(2) The transmission interval of the data in the traffic, which is sent from the LAN segment of the user where the minimum access band is guaranteed, is monitored, and the band capacity overflow of the fixed band path is judged by assuming that the access band is based on the interval. In other words, detection is performed because the data transmission interval decreases as the traffic increases.

### Packet switch

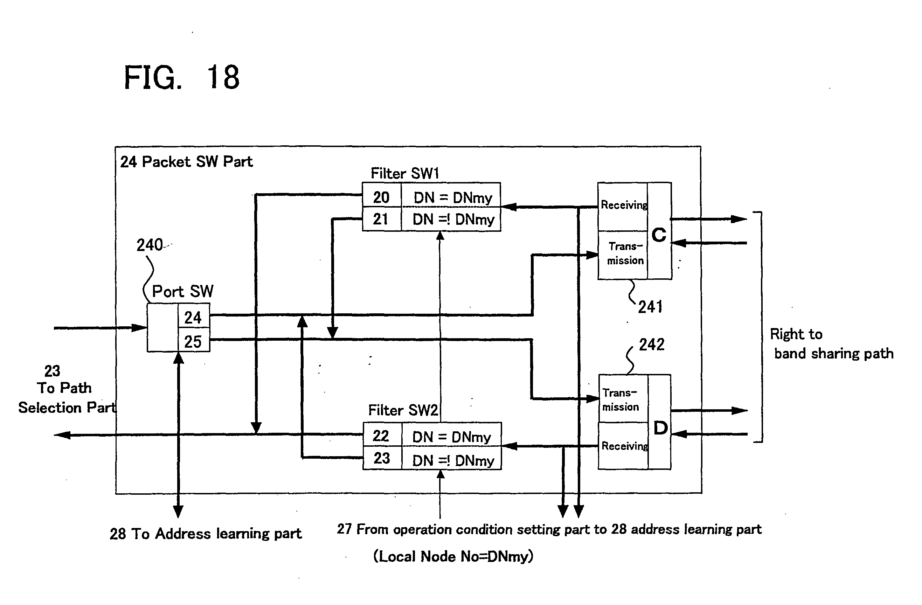

Fig. 18 is a diagram depicting a configuration example of the packet switch part 24. Detailed operation of this configuration will now be described.

### [Receive function]

A packet from the band sharing path is input to the filter switch SW1 or SW2 via the port C or port D respectively. In the filter switch SW1 or SW2, the local node number DN = DNmy has been set by the operation condition setting part 27.

In the case of a packet received from the port C, the DN value of the packet and the DNmy value are compared by the filter switch SW1, and if both are "DNmy", then the packet flows into the port 20 side and is output to the path selection part 23 as a packet addressed to the local node.

If the DN value of the packet is not "DNmy", then the packet flows into the port 21 side and is output from the port D to be transferred to the next node.

If the DN value indicates broadcast, the packet is output to both the ports 20 and 21 sides, and then is output to the port D to be received by the local node and to be transferred to the next node.

The packet received from the port D is processed in the same way as the above packet received from the port C by the filter switch SW2.

The packets received from the ports C and D are transferred in parallel to the address learning part 28 for address reference at transmission. This function will be described later.

### [Transmission function]

A packet from the path selection part 23 is input to the port switch part 240. The port switch part 240 refers to the learning table which the address learning part 28 has using the DA value of the packet, determines the port number No (C or D), then outputs the packet to the port 24 of the port switch part 240 if the packet is transferred to the node at the port C side. The packet is output to the port 25 if the packet is transferred to the port D side.

### Address learning

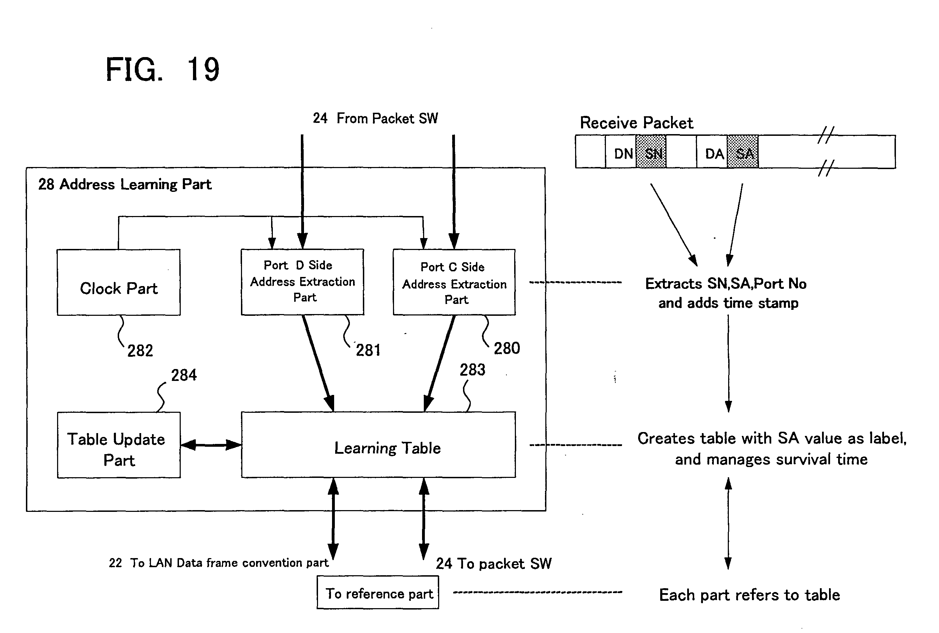

Fig. 19 is a diagram depicting a configuration example of the address learning part 28 in Fig. 9. Detailed operation will now be described.

The receive packet, which is output from the packet switch part 24, is input to the address extraction parts 280 and 281 dedicated to the ports C and D. In the address extraction parts 280 and 281, data associating the SN and SA values extracted from the receive packets with the input port number No (C or D) is generated.

Then the time stamp which is periodically integrated and generated by the clock part 282 is added to the packet as a learning time, and the packet is output to the learning table part 283.

The learning table part 283 generates a data table where the SA value in the above data is a label, and stores the data table. In the case of the same SA value, data is overwritten on the table with the same label, and the time stamp is updated.

The table update part 284 constantly monitors the time stamp in the learning table 283 so as to effectively utilize the learning table 283 which has a limited number of tables, and if the time stamp is not updated for a specified time (e.g. 300 seconds) or longer, the table update part 284 deletes the table with the label. In other words, a table which is not used is deleted.

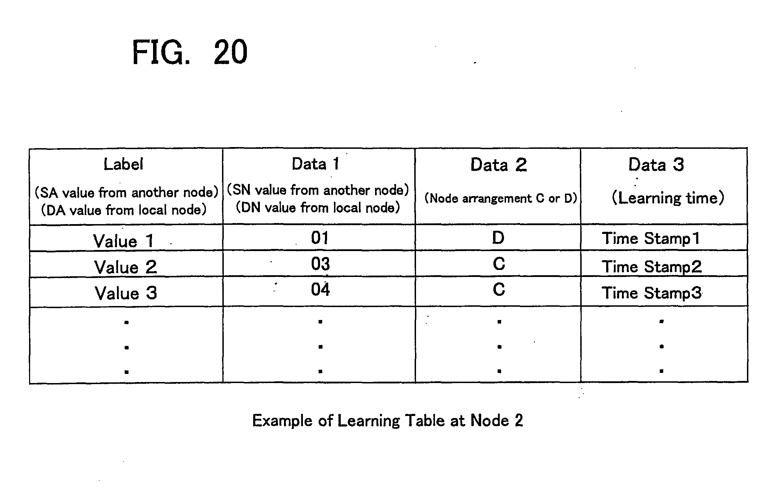

Fig. 20 is a table indicating an example of the learning table values in the node 02 in Fig. 6.

According to the embodiments described above with reference to the drawings, the present invention connects between discretely arranged LAN segments sharing the band of one path in the SONET/SDH system with a ring configuration. By this, a pseudo-LAN switch based on a network is implemented.

As a result, a plurality of virtual networks of LANs can be constructed in the same ring, the number of physically connected lines between LAN segments and communication cost can be dramatically reduced, and efficient inter-LAN communication utilizing bands in the SONET/SDH system become possible.

The user can construct an economical system by an inter-LAN connection configuration using current LAN - WAN - LAN devices while considering expanding the LAN system in the future, and can decrease the management load by providing an interface which is common with the LAN managed by the user.

If a fixed band path of a PP connection is also created between specific nodes (LAN segments) in the above mentioned configuration, the fixed band path, which is normally used, and the shared band path, which is used at a band overflow when burst data is generated, are dynamically switched depending on the traffic status, a minimum access band can be guaranteed between the nodes (LAN segments) where the fixed band path is also created, and the loss of data, which exceeded the fixed band due to a burst data generation, can be minimized during communication.

The above embodiments described with reference to the drawings are for describing the present invention, and the present invention is not restricted by this. The protective scope of the present invention includes the claims and equivalents thereof.

## Claims

1. An inter-LAN communication device for controlling inter-communication between a plurality of LAN segments connected in a ring configuration, comprising:
LAN interface accommodation means for accommodating a communication interface of said LAN segments;
traffic monitoring means for monitoring the traffic of LAN data;
communication control means for controlling the communication for inter-connecting a LAN segment of a local node and a LAN segment of another node;
path selection means for switching a communication path according to the instruction from the traffic monitoring means; and
packet switch control means for switching the packeted LAN data.

2. The inter-LAN communication device according to Claim 1, wherein said communication control means further includes a buffer which stores data transmitted from the LAN segment, and said traffic monitoring means monitors traffic by monitoring the capacity of said buffer which stores data transmitted from the LAN segment.

3. The inter-LAN communication device according to Claim 1, wherein said traffic monitoring means monitors traffic by monitoring the transmission intervals of data which are transmitted from the LAN segment.

4. The inter-LAN communication device according to Claim 1, wherein said communication control means packets the LAN data by adding overhead which indicates the node numbers of a transmission source and a transmission destination.

5. The inter-LAN communication device according to Claim 1, wherein said communication control means adds a sequence number for each packet at the transmission side so as to prevent a mismatch of the arrival sequence when the communication path is different for each packet due to path switching.

6. The inter-LAN communication device according to Claim 5, wherein said path control means adds a sequence number for each packet after said added node number at the transmission side so as to prevent a mismatch of the arrival sequence when the communication path is different for each packet due to path switching.

7. The inter-LAN communication device according to Claim 5, wherein said path control means matches the phases of packets by referring to said sequence numbers and deleting said sequence numbers of the added information at the receiving side.

8. The inter-LAN communication device according to Claim 1, wherein said packet switch control means further includes an address learning part, which learns information where the transmission source and transmission detection node number information which is added to a packet sent from another LAN segment, the transmission source and transmission destination address information which the LAN data has, and the communication port information which the packet switch control means has, are associated and stores said association information.

9. The inter-LAN communication device according to Claim 8, wherein for the node numbers of the overhead to indicate the transmission source and the transmission destination in said communication control means, a local node number which is preset, is added as the transmission source node number and the node number which is derived by searching and referring to said learned and stored association information on the node numbers, communication ports and addresses based on the transmission destination addresses which the LAN data bus has, is added as the transmission destination node number.

10. The inter-LAN communication device according to Claim 8, wherein said packet switch control means compares the local number, which is preset, and the transmission destination node number of a packet sent from another node, which is another LAN segment, based on said learned and stored association information of the node numbers, ports and addresses, and the transmission destination packet is received by the local node if the transmission destination node number is the same as the local node number, and a communication port is selected and the packet is transferred if the transmission destination node number is another node number.

11. An inter-LAN communication system where communication is performed connecting a plurality of LAN segments, comprising:
a network,
an inter-LAN communication device which is installed at each one of a plurality of nodes of said network, and
a LAN segment connected to said inter-LAN communication device, wherein
said inter-LAN communication device further comprises:
an interface which is common with the LAN segment to be connected,
means of monitoring traffic status of LAN data from said LAN segment,
an address learning part which learns and stores data generated in one LAN segment based on said traffic status and routing information added to the LAN data from another LAN segment when the data is transferred to the other LAN segment, and
packet switch control means for inter-connecting one LAN segment and the other LAN segment based on said learned and stored information.

12. The inter-LAN communication system according to Claim 11, wherein said packet switch control means in the inter-LAN communication device installed in each one of the plurality of nodes of said network further comprises two communication ports, and band sharing type inter-communication between the plurality of LAN segments is implemented by the cascade connection of the band (path) in a ring format.

13. The inter-LAN communication system according to Claim 12, wherein said packet switch control means sets a fixed band path of a Point-to-Point connection between specified nodes, so as to guarantee a minimum access band between said nodes, and the band sharing path is used as a bypass route when traffic exceeds the band of said fixed band.

14. The inter-LAN communication system according to Claim 12, wherein said packet switch control means always transmits the packeted LAN data for transmission to the band sharing path when only the band sharing type path is used.

15. The inter-LAN communication system according to Claim 12, wherein said network is a SONET/SDH system used for each band (path), and has a plurality of ring configurations.

16. The inter-LAN communication system according to Claim 13, wherein said path control means normally sends the packeted LAN data for transmission to said fixed band path when the minimum access band guarantee type is used, and dynamically switches traffic to the band sharing path when said means of monitoring traffic notifies a band overflow of said fixed band path.

17. An inter-LAN communication system which performs inter-communication between a plurality of LAN segments connected in a ring configuration, comprising:
a network,
an inter-LAN communication device which is installed in each one of the plurality of nodes of said network, and
a LAN segment which is connected to said inter-LAN communication device, wherein
said inter-LAN communication device further comprises:
LAN interface accommodating means for accommodating a communication interface of said LAN segment,
traffic monitoring means for monitoring traffic of LAN data,
communication control means for controlling communication to inter-connect the LAN segment of the local node and the LAN segment of another node,
path selection means for switching a communication path according to instructions from the traffic monitoring means, and
packet switch control means for switching said packeted LAN data.
